# EUROPÄISCHE PATENTSCHRIFT

(11) **EP 0 451 225 B1**
(45) Veröffentlichungstag und Bekanntmachung des Hinweises auf die Patenterteilung: **02.02.1994**
(21) Anmeldenummer: 90913692.1
(22) Anmeldetag: 02.10.1990
(51) Int. Cl.: B65G 65/48

(54) **MIKRODOSIERGERÄT**
MICRO-METERING DEVICE
INSTRUMENT DE MICRODOSAGE

(30) Priorität: 09.10.1989 CH 3674/89
(43) Veröffentlichungstag der Anmeldung: 16.10.1991
(73) Patentinhaber: Bühler AG, 9240 Uzwil (CH)
(72) Erfinder: GMUER, Bruno, CH-9014 St. Gallen (CH); NÄF, Peter, CH-9410 Heiden (CH)
(74) Vertreter: von Samson-Himmelstjerna, Friedrich R., Dipl.-Phys.
(86) Internationale Anmeldenummer: CH9000233
(87) Internationale Veröffentlichungsnummer: WO9104933

(56) Entgegenhaltungen:
- EP-A- 212 256
- DE-B- 1 063 974
- GB-A- 484 351
- GB-A- 931 117
- GB-A- 1 601 568
- US-A- 4 740 128

## Beschreibung

### Technisches Gebiet

Die Erfindung betrifft eine Dosierwaage für die kontinuierliche Abgabe von Schüttgütern, welche einen Wägebehälter mit Austraghilfen sowie eine Dosier schnecke aufweist.

Ein Teil der Schüttgüter kann eingeteilt werden in die drei Gruppen: schwer-, mittel- und leichtfliessfähig. Leichtfliessfähig sind in der Regel alle granulatartigen Güter, also insbesondere ganze Getreidekörner und Griess. Man spricht bei den Körnern häufig auch von rieselfähigen Gütern. Sehr bekannt ist das problematische Fliessverhalten von Streusalz und Streuzucker. Meistens in Abhängigkeit von dem momentanen Feuchtigkeitsgehalt können diese beiden Stoffe leicht rieseln wie trockener Sand oder im Extremfall gar nicht mehr aus dem Streuer geschüttelt werden. Mehle, Brotmehl usw. werden allgemein zu den schwerfliessfähigen Produktklassen gezählt, besonders wenn Mehl aus kleinen Behältern oder durch kleine Oeffnungen bewegt werden soll.

### Stand der Technik

Bei Aufbereitung von Nahrungs- und Futtermitteln ist es vielfach notwendig, Mischungsanteile in verhältnismassig kleinen Mengen zusammenzumischen oder in grössere Chargen kleine Prozente von Zusätzen hineinzumischen. Zum Beispiel ist dies bei den Suppen und Gewürzmischungen der Fall oder bei der Herstellung von Tierfuttermischungen, ferner z.Bsp. bei der Zudosierug von Mehl zu Griess bei der Teigwarenherstellung.

In jedem Fall wird bei automatischen Betrieben gefordert, dass die Komponenten in genau festlegbaren Gewichts-Anteilen zusammengebracht werden. Von der industriellen Praxis wird ein möglichst störungsfreier Betrieb gefordert. Der bekannte Störfall von Zucker- und Salzstreuer sollte in automatischen Betrieben nicht vorkommen. Abhlife kann auf zwei Arten geschaffen werden. Das zu dosierende Produkt wird in eine solche Beschaffenheit gebracht, dass das Gut immer in einem nahezu rieselfähigen Zustand bleibt, also immer leicht fliessfähig bleibt. Das bedingt oft Extra-Behandlungen wie Trocknung oder die Herstellung einer speziellen Granulation bzw. eine pulverige Form, was regelmassig einer Verteuerung des Rohmaterials gleichkommt.

Der zweite Weg ist eine Komplizierung aller Dosierungseinrichtungen, sodass weder Verstopfungen noch Brückenbildung möglich sind.

Die US-PS Nr. 3 151 782 zeigt nun eine Lösung wie sie in verschiedenen Bereichen, besonders für chemische Stoffe, verbreitet ist. Von einem gemeinsamen Antrieb wird sowohl der Produktnachschub von einem Vorbehälter wie die genaue Dosierung bzw. Bewegung einer Dosierschnecke sicherstellt. Der Nachschub aus dem Vorbehälter wird durch eine Rüttelbewegung erzeugt, wobei ein Durchschiessen des Gutes durch die Bodenöffnung durch eine Abdeckplatte über der Oeffnung verhindert wird. Viele Stoffe, besonders Nahrungs- oder Futtermittel, neigen jedoch bei Vibrationen zum Zusammenbacken, sodass sich hier für die Vibrationen keine echte Dosierhilfe befindet. Die Betriebssicherheit wird vielmehr gerade durch die Rüttelung gefährdet.

Eine weitere Dosier vorrichtung gemäß dem uberbegriff des Anspruchs 1 ist aus der GB-A- 931 117 bekannt

### Darstellung der Erfindung

Der Erfindung wurde nun die Aufgabe gestellt, eine Dosiereinrichtung zu schaffen, die einfach im Aufbau, betriebssicher und exakt in der Arbeitsweise ist und sich besonders für automatische Anlagen für leicht-, mittel- und schwerfliessfähige Schüttgüter eignet.

Diese Aufgabe wird durch die Merkmale des Anspruchs 1 gelöst.

Praktische Versuche haben bestätigt, dass die Aufgabe in jeder Beziehung überraschend gut gelöst werden konnte. Es hat sich gezeigt, dass das neue Dosiergerät eine viel grössere Produktunabhängigkeit besitzt als die bekannten Lösungen, und dass selbst bei schwerfliessfähigen Schüttgütern auf diese Weise eine gleichmässige Dosierung mit hoher Genauigkeit erreicht wird.

Bei Dosierwaagen wird zur Begünstigung des Produktflusses sowie zur Auflockerung des Gutes häufig ein haspelartiges Drehelement in dem unteren Bereich des Wägebehälters angeordnet. In vielen Fällen ist dabei nicht zu vermeiden, dass pulsartige Bewegungen auf das Produkt erzeugt werden. Die senkrecht wirkende Komponente der mechanischen Pulsierung verfälscht die Genauigkeit der Gewichtserfassung. Es entstehen teils trotzdem Pressungen in dem Schüttgut, so dass der Austrag selbst durch eine Mikrodosierschnecke nicht die gewünschte Gleichmässigkeit für die Abgabe des Schüttgutes erreicht. Demgegenüber hat der horizontal bewegte Räumer keine nachteilige Wirkung auf das Wägeresultat. Die Flachbodenbauweise gestattet eine optimale Bauform für den Wägebehälter, welcher bevorzugt als einfacher senkrechter Zylinder ausgebildet sein kann. Die zylindrische Bauform ist ideal für den überwiegenden Teil der Schüttgüter, besonders in dem Bereich der Nahrungsmittelindustrie. Die bevorzugt seitliche Produktübergabeöffnung erlaube die Produktübergabe ausserhalb der variierneden Produktsäule in dem Wägebehälter. Die Dosierschnecke übernimmt das Gut mit konstanten Bedingungen. Damit entstehen keinerlei Produktpressungen bzw. Produktverdichtungen, was ganz besonders wichtig ist zum Bsp. bei fetthaltigen Produkten, da bei jedem volumetrischen Dosiergerät Schwankungen in der Dosiergenauigkeitentstehen, in Abhängigkeit von variierender Produktedichte.

Die Erfindung betrifft ferner eine ganze Anzahl weiterer besonders vorteilhafter Ausgestaltungen.

Vorteilhafterweise weisen Räumer und Dosierschnecke einen gemeinsamen Antrieb mit zwei parallelen Antriebswellen auf, wobei die Dosierschnecke über ein Riemenvariatorgetriebe angetrieben wird.

Ferner ist es möglich, Räumer und Dosierschnecke zusammen mit dem Antrieb als eine Blockeinheit auszubilden, wobei der Vorbehälter als ein in der Grösse wählbares, leicht trennbares Bauteil gestaltet sein kann. Damit aber gestattet die neue Erfindung die erreichten positiven Effekte der gleichmassigen und genauen Dosierung mit sehr einfachen baulichen Mitteln zu erreichen.

Zweckmässig wird der obere Räumer zweiflüglig und der untere vierflüglig ausgebidet. Mit der geringsten Elementzahl wird der gleichmässige Produktnachfluss aus dem Behälter und die Zudosierung zu der Dosierschnecke sichergestellt.

Ein weiterer vorteilhafter Gedanke liegt darin, dass die Luftschleuse zur wahlweisen Belüftung und Entlüftung des Wägebehälters steuerbar ausgebildet wird. Im Zyklus der Füllung und Entleerung des Wägebehälters werden die Luftdruckverhältnisse geregelt, einerseits beim Befüllen im Hinblick auf die Reinhaltung der Anlage, anderseits beim Entleeren auf eine Konstanthaltung des Luftdruckes in dem Behälter, um entsprechende Störungen des Wägeresultates zu vermeiden.

In vielen Anwendungsfällen können mehrere Dosierwaagen eine Sammelwaage speisen und zusammen eine Dosiergruppe bilden. Sowohl die Sammelwaage wie die Dosierwaage können als Differenzialwaage ausgebildet sein.

### Beschreibung der Erfindung

In der Folge wird nun die Erfindung anhand verschiedener Ausführungsbeispiele mit weiteren Einzelheiten erläutert. Es zeigen:
- die Fig. 1: eine perspektivische Darstellung der zentralen Elemente des Mikrodosiergerätes
- die Fig. 2: eine Ansicht der Fig. 1 mit Schnitt durch den Wägebehälter

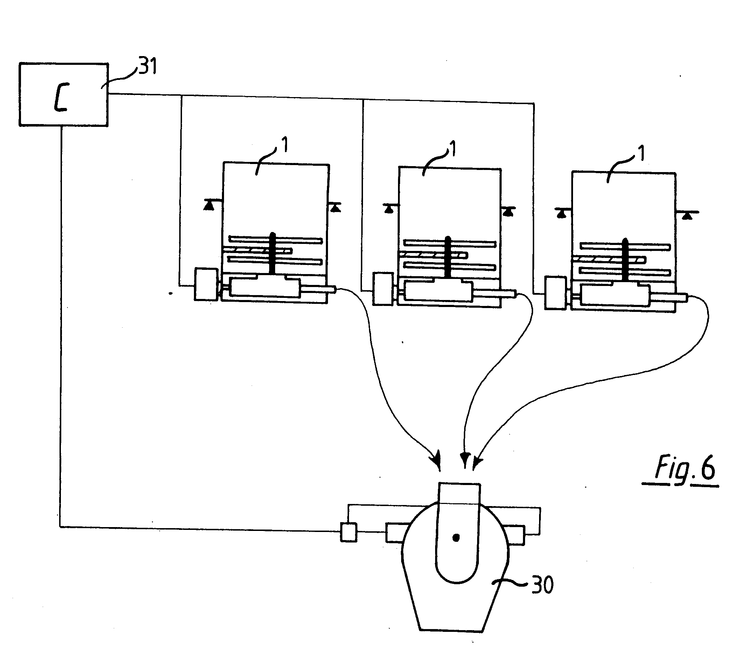

- die Fig. 3: einen Schnitt 4 - 4 der Fig. 2
- die Fig. 4: einen Schnitt 3 - 3 der Fig. 2
- die Fig. 5: schematisch den Antrieb des Mikrodosiergerätes
- die Fig. 6: eine ganze Mikrodosiergruppe

### Wege zur Ausführung der Erfindung

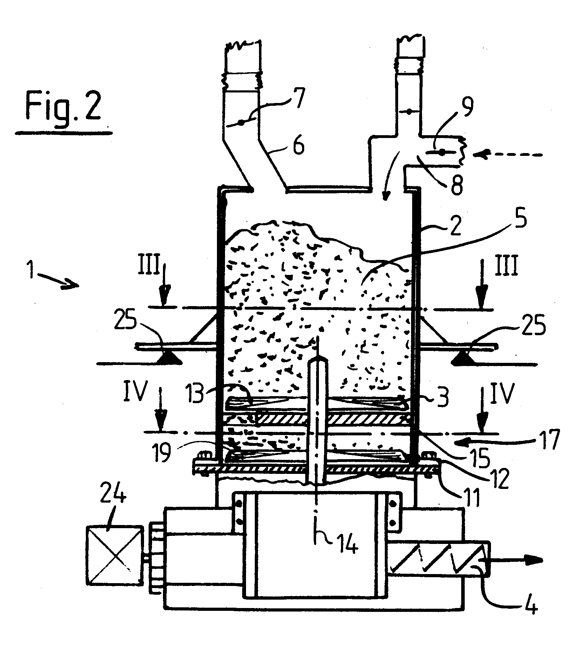

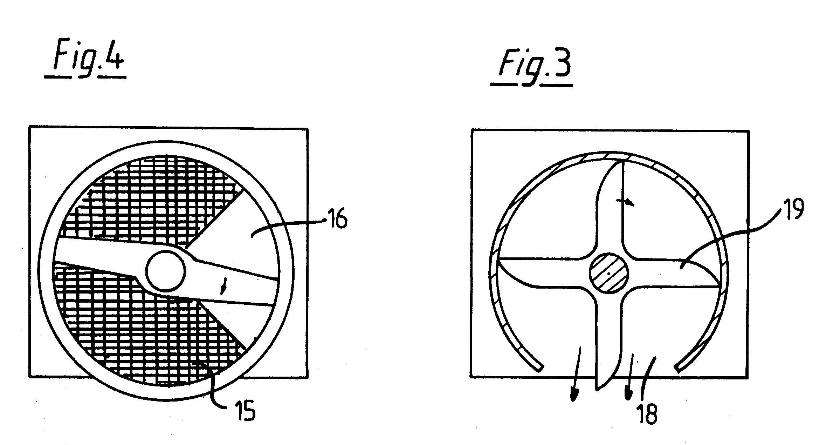

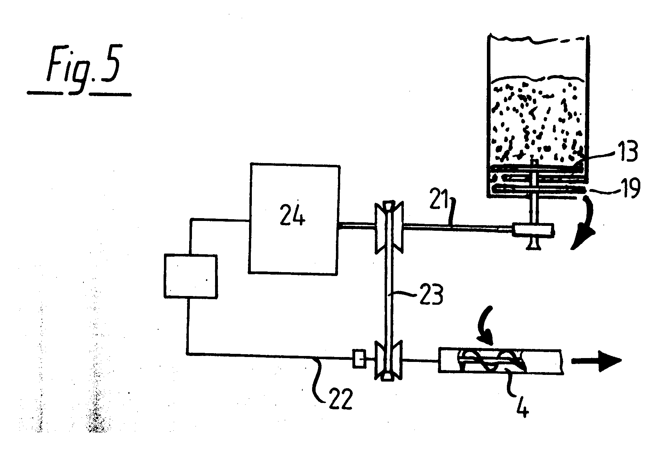

In der Folge wird nun auf die Figur 2 Bezug genommen. Dabei ist die gesamte Einheit als Dosierwaage 1 ausgebildet, welche einen Wägebehälter 2 mit Austraghilfen 3 sowie einer Dosierschnecke 4 besteht. Das Gut 5 wird über einen Einlaufstutzen 6, der durch einen Schieber 7 verschliessbar ist, eingespeist. Ueber eine Luftschleuse 8 kann entweder Raumluft über eine mit Klappen 9 verschliessbare Oeffnung zugelassen oder bei geschlossener Klappe 9 während dem Befüllen des Wägebehälters 2 staubhaltige Luft aspiriert werden.

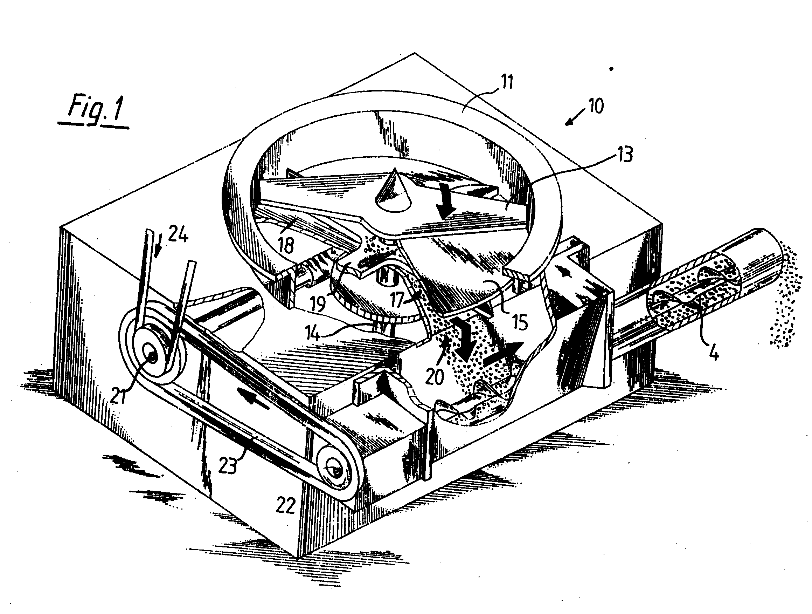

In der Figur 1 ist der zu einer Blockeinheit 10 konzipierte Unterteil der ganzen Vorrichtung teilweise aufgeschnitten dargestellt. Nach oben ist die Blockeinheit durch einen Befestigungsflansch 11 begrenzt, welcher mit einem zugehörigen Flansch 12 des Wägebehälters 2 verschraubt bzw. im Falle von häufig wechselnden Produkten mit Schnellverschlüssen verbunden wird.Die Austraghilfe 3 besteht aus einem 2 flügeligen Räumer 13, der über eine senkrechte Achse 14 angetrieben wird. Der Räumer 13 bewegt sich mit wenig Abstand unmittelbar über einen Entlastungsboden 15, welcher im wesentlichen horizontal angeordnet ist. Der Entlastungsboden 15 ist in der Figur 4 mit Horizontal- und Vertikalschraffur im Grundriss dargestellt, wobei er eine sektorförmige Produktdurchfallöffnung 16 aufweist. Der Räumer 13 fördert das Gut in einen Vordosierraum 17 zwischen einem eigentlichen Boden 18 und dem Entlastungsboden 15, über dem Boden 18 wirkt ein zweiter Räumer 19 für den eigentlichen Austrag aus dem Vordosierraum 17 in den Einzugsbereich 20 der Dosierschnecke 4. Durch die seitliche Anordnung der Produktdurchfallöffnung 16 resp. dem Vorhandensein des Entlastungsbodens 15 über dem Einzugsbereich resp. seiner seitlichen Produktübergabeöffnung 20 wird letzterer von dem Auflagegewicht des Produktes 5 in dem Wägebehälter 2 entlastet. Das Produkt wird auf diese Weise in bevorzugt 3 Schritten von dem Wägebehälter 2 durch die Dosierschnecke abgegeben. Der Räumer 13 hat sowohl Misch- wie Austraghilfsfunktion und und gibt das Gut in den Vordosierraum 17. Von dem Vordosierraum 17 wird es durch den zweiten Räumer 19 in den Einzugsbereich 20 ausgetragen. Von dem Einzugsbereich 20 erst wird das Gut durch die Dosierschnecke 4 in der je gewählten Menge der Abgabestelle zudosiert, was bevorzugt in freiem Fall, also ohne Austragsbehinderung aus der Dosierschnecke 4 geschieht. Die Räumer 13 und 19 sowie die Dosierschnecke 4 werden über zwei parallel angeordnete Antriebsachsen 21 resp. 22, einen Riemenübertrieb 23 und einem gemeinmen Antrieb 24 angetrieben. Der Antrieb 24 kann als fernsteuerbares Variatorgetriebe ausgebildet sein. Dabei genügt es in den weitaus meisten Fällen, wenn die Antriebsachsen 21 resp. 22 ein vorgegebenes Drehzahlerhältnis haben. Bei Vergrösserung resp. Verkleinerung der Dosierleistung werden beide Drehzahlen entsprechend verändert.

Die gesamte Dosiereinheit ist an Wägeelementen 25 aufgehängt resp. abgestützt. Die Wägeelemente zeigen ein Gesamtgewicht an, das alle mechanischen Elemente wie auch alles Produkt, das in dem Wägebehälter gelagert ist, umfasst, inklusive das Produkt, das auf dem Weg zu der Dosierschnecke 4 und in der Dosierschnecke 4 sich befindet. Die Dosierwaage 1 arbeitet als Differenzialwaage. Der Wägebehälter 2 wird periodisch gefüllt. Nach der Füllung kann aufgrund der Gewichtsminderung die genaue Dosierleistung durch Differenzbildung der Gewichtswerte abgenommen werden, bzw. die genaue Dosierleistung durch im voraus errechnete Gewichtsverminderung festgelegt und gesteuert werden. Damit keine Luftdruckschwankungen die Gewichtsanzeigen stören, wird der Wägebehälter 2 nur während dem Befüllen aspiriert, während dem Entleeren aber mit dem Umgebungsluftdruck verbunden. Im störungsfreien Betrieb kann die genaue Drehzahl der Dosierschnecke für eine bestimmte Dosierleistung festgehalten werden. Diese Drehzahl kann dann während dem Befüllen des Waagebehälters konstant gelassen werden, bzw. bei einer identischen Dosieraufgabe wieder vorgewählt und in der Folge mit dem Differenzwägewert verglichen werden.

Bei vielen Dosieraufgaben müssen mehrere verschiedene Produkte einer gemeinsamen Mischwaage 30 zugeführt werden, wie als Ausführungsbeispiel in der Fig. 6 dargestellt ist. Es sind dabei drei Dosierwaagen 1 dargestellt, welche von einem gemeinsamen Rechner 31 gesteuert werden. Die Einzeldosierung wird jeweils der gemeinsamen Mischwaage 30 übergeben.

## Patentansprüche

1. Dosierwaage (1) für die kontinuierliche Abgabe von Schüttgütern, welche einen Behälter (2) mit Austraghilfen (3) sowie eine Dosierschnecke (4) aufweist, und wobei
a) der Behälter (2) wenigstens teilweise einen flachen Boden (15, 18) aufweist, über dem ein horizontal bewegter Räumer (13, 19) angeordnet ist, mit einer Produktübergabeöffnung (20) zu der Dosierschnecke (4);
b) der Räumer (13, 19) als auf zwei Ebenen wirksamer Räumer ausgebildet und zwischen den zwei Räumerarmen (13, 19) ein Entlastungsboden (15) angeordnet ist, so daß die Produktübergabeöffnung von dem Behälter (2) zu der Dosierschnecke druckenlastet ist, wobei ferner
c) der Behälter (2) als geschlossener Behälter mit einer Produkteinspeiseöffnung resp. Einlaufstutzen (6) ausgebildet ist, dadurch gekennzeichnet, daß der Behälter (2) eine Wägebehälter mit einer Luftschleuse (8) ist, und die Dosier vorrichtung als Dosiereinheit an Wägeelementen aufgehängt resp. abgestützt ist, und die so gebildete Dosierwaage als Differenzialwaage ausgebildet ist.

2. Dosierwaage nach Patentanspruch 1, **dadurch ge****kennzeichnet.** daß die Luftschleuse (8) zur wahlweisen Belüftung und Entlüftung des Wägebehälters (2) steuerbar ist.

3. Dosierwaage nach einen der Patentansprüche 1 oder 2, **dadurch gekennzeichnet,** daß die Räumer (13, 19) und die Dosierschnecke (4) zusammen mit dem Antrieb (24) eine Blockeinheit bilden und der Wägebehälter (2) als ein, in der Größe wählbares, leicht trennbares Bauteil ausgebildet ist.

4. Dosierwaage nach einem der Patentansprüche 1 bis 3, **da****durch gekennzeichnet,** daß die Räumer (13, 19) sowie die Dosierschnecke (4) einen gemeinsamen Antrieb (24) mit zwei parallelen Antriebsachsen (21, 22) aufweisen, wobei die Dosierschnecke (4) vorzugsweise über ein Riemenvariatorgetriebe angetrieben wird.

5. Dosierwaage nach Patentanspruch 4, **dadurch ge****kennzeichnet,** daß der obere Räumer (13) zweiflüglig und der untere Räumer (19) vierflüglig ausgebildet ist.

6. Dosierwaage nach einem der Patentansprüche 1 bis 5, **da****durch gekennzeichnet,** daß mehrere Dosierwaagen (1) eine Mischwaage (30) speisen und zusammen eine Dosiergruppe bilden.

## Claims

1. Dosaging balance (1) for the continuous discharge of bulk materials, which has a container (2) with discharge aids (3) and also a dosaging screw or worm (4), wherein
a) the container (2) has at least in part a flat floor (15, 18) above which a horizontally moved clearing element (13, 19) is arranged, with a product transfer aperture (20) to the dosaging worm (4);
b) the clearing element (13, 19) is constructed as a clearing element effective in two planes, and a load relief floor (15) is arranged between the two clearing element arms (13, 19), so that the product transfer aperture from the container (2) to the dosaging worm is relieved of pressure, also wherein
c) the container (2) is constructed as a closed container with a product infeed aperture or inlet union (6), characterised in that the container (2) is a weighing container with an air lock (8), and the dosaging apparatus is suspended or supported as a dosaging unit on weighing elements, and the dosaging balance thus formed is constructed as a differential balance.

2. Dosaging balance according to claim 1, characterised in that the air lock (8) is controllable for selective ventilating and venting of the weighing container (2).

3. Dosaging balance according to one of claims 1 or 2, characterised in that the clearing elements (13, 19) and the dosaging worm (4) form together with the drive (24) a unit assembly, and the weighing container (2) is constructed as a selectable-size, easily separatable component.

4. Dosaging balance according to one of claims 1 to 3, characterised in that the clearing elements (13, 19) and the dosaging worm (4) have a common drive (24) with two parallel drive shafts (21, 22), the dosaging worm (4) being driven preferably by means of a belt-type change speed gear.

5. Dosaging balance according to claim 4, characterised in that the upper clearing element (13) is of two-blade construction, and the lower clearing element (19) four-blade.

6. Dosaging balance according to one of claims 1 to 5, characterised in that a plurality of dosaging balances (1) supply a mixing balance (30) and together form a dosaging group.

## Revendications

1. Doseuse pondérale (1), permettant de délivrer des matières en vrac d'une manière continue, qui comprend une trémie peseuse (2) comportant des auxiliaires d'évacuation (3) et une vis sans fin de dosage (4), tandis que :
a) la trémie (2) comprend, au moins en partie, un fond plat (15, 18) au-dessus duquel est disposé un organe d'arasement (13, 19) à déplacement horizontal et comportant une ouverture (20) de transfert du produit vers la vis sans fin de dosage (4),
b) l'organe d'arasement (13, 19) est réalisé sous la forme d'un organe d'arasement agissant dans deux plans, tandis qu'un fond de soulagement (15) est disposé entre les deux bras (13, 19) de l'organe d'arasement, de sorte que l'ouverture de transfert de produit de la trémie (2) à la vis sans fin de dosage bénéficie d'un soulagement en pression, et en outre
c) la trémie (2) est réalisée sous la forme d'une trémie fermée comportant une ouverture d'introduction de produit ou une tubulure d'entrée (6),
caractérisée en ce que la trémie (2) est une trémie peseuse comportant une écluse d'air (8), en ce que le dispositif de dosage, en tant qu'unité de dosage, est suspendu à des éléments de pesage ou prend appui sur de tels éléments et en ce que la doseuse pondérale ainsi constituée est réalisée sous la forme d'une balance différentielle.

2. Doseuse pondérale suivant la revendication 1, caractérisée en ce que l'écluse d'air (8) est agencée de façon à pouvoir être commandée de manière à permettre au choix une introduction ou une évacuation d'air de la trémie peseuse (2).

3. Doseuse pondérale suivant l'une des revendications 1 et 2, caractérisée en ce que les organes d'arasement (13, 19) et la vis sans fin de dosage constituent, avec l'entraînement (24), un bloc unitaire et en ce que la trémie peseuse (2) est réalisée sous la forme d'un élément structurel facilement séparable dont la taille peut être choisie.

4. Doseuse pondérale suivant l'une des revendications 1 à 3, caractérisée en ce que les organes d'arasement (13, 19) et la vis sans fin de dosage (4) comprennent un entraînement commun comportant deux axes d'entraînement (21, 22) parallèles, la vis sans fin de dosage (4) étant de préférence entraînée au moyen d'un variateur de vitesses à courroie.

5. Doseuse pondérale suivant la revendication 4, caractérisée en ce que l'organe supérieur d'arasement (13) comporte deux ailes et l'organe inférieur d'arasement (19) comporte quatre ailes.

6. Doseuse pondérale suivant l'une des revendications 1 à 5, caractérisée en ce que plusieurs doseuses pondérales (1) alimentent une balance de mélange (30) et constituent ensemble un groupe de dosage.
